# EUROPEAN PATENT APPLICATION

(11) **EP 1 071 086 A2**
(43) Date of publication of application: **24.01.2001**
(21) Application number: 00115000.2
(22) Date of filing: 21.07.2000
(51) Int. Cl.: G11B 7/24

(54) **Optical disk**

(30) Priority: 23.07.1999 JP 20876299
(71) Applicant: VICTOR COMPANY OF JAPAN LIMITED, Yokohama-Shi Kanagawa-Ken (JP)
(72) Inventor: Ueno, Ichiro, Isehara-shi, Kanagawa-ken (JP)
(74) Representative: HOFFMANN - EITLE

(57) **Abstract**

An optical disk is composed of a disk substrate, a mask layer, and a recording layer. The mask layer is formed on the disk substrate and consists of a read mask layer and a write mask layer. The mask layer may be a mixture of a read mask material and a write mask material. The recording layer is formed on the mask layer. For data write and read operations, a laser beam is made incident to the substrate, to irradiate the recording layer. At this time, the mask layer reduces a spot diameter of the laser beam on the recording layer without damaging the recording layer.

## Description

### BACKGROUND OF THE INVENTION

### 1. Field of the Invention

The present invention relates to an optical disk for optically writing and reading data at high density (ultrahigh resolution), and particularly, to an optical disk made of a disk substrate on which a mask layer and a recording layer are formed.

### 2. Description of the Related Art

An optical disk is a medium for writing and reading a large amount of data in a short access time. Advanced information and digital technology requires an optical disk capable of more densely writing and reading data.

Data write and read operations on an optical disk include writing data to the optical disk, reading data from the optical disk, and simultaneously writing and reading data to and from the optical disk.

Optically writing and reading data to and from an optical disk at high density involve the techniques of 1) shortening the wavelength of a laser beam used to write or read data to or from the optical disk, 2) enlarging the numerical aperture (NA) of a lens for focusing a laser beam on the optical disk, 3) making multiple recording layers on the optical disk, 4) multiplexing data to be written to the optical disk by varying the wavelength of a laser beam, and 5) forming a mask layer on the optical disk to substantially reduce the size of a laser beam spot on the optical disk.

Among these techniques, the technique 5) is disclosed in Japanese Laid-Open Patent Publications No.12,673/1993, No.12,715/1993, No.28,498/1993, No.28,535/1993, No.73,961/1993, No.234,136/1993 and No.315,419/1996.

Fig. 14 is an enlarged sectional view showing an optical disk according to a prior art. The optical disk has a transparent disk substrate 110 on which a mask layer 140, a recording layer 160, and a passivation layer 180 are successively formed.

Fig. 15 is a graph showing the relationship between the temperature and optical transmittance of the conventional optical disk. The mask layer 140 has small transmittance when no laser beam comes from the substrate 110 or when the power of a laser beam coming from the substrate 110 is weak. The transmittance of the mask layer 140 increases if the power of a laser beam from the substrate 110 is strong enough to increase the temperature of the mask layer 140 and chemically change the mask layer 140.

Figs. 16A and 16B show intensity distributions of the laser beam made incident to the mask layer 140 and of the power of a beam transmitted through the mask layer 140, in which Fig.16A is in an optical disk rotating direction and Fig.16B in an optical disk radius direction.

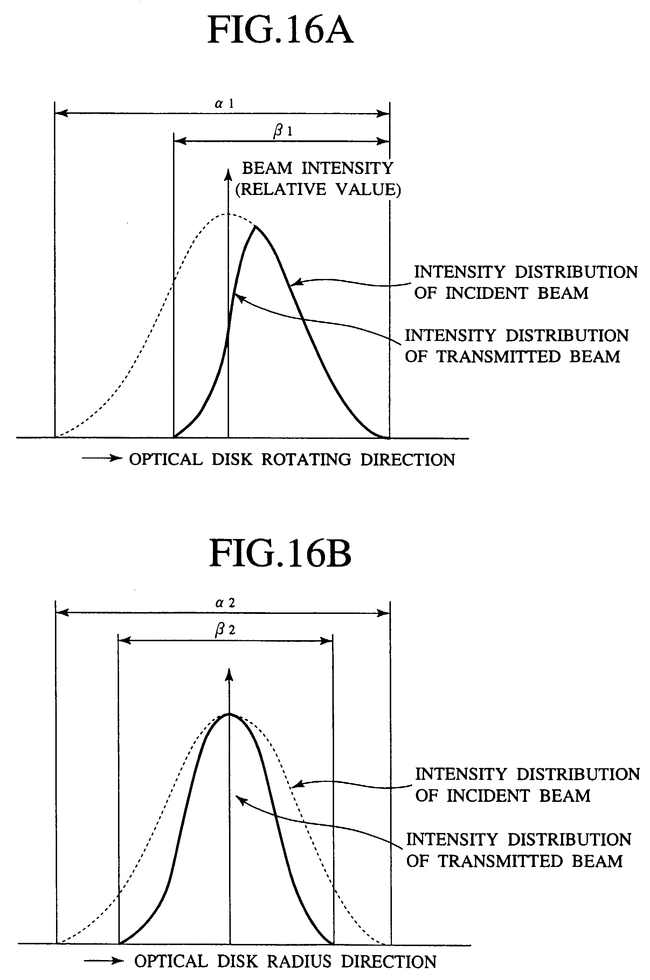

In Figs. 16A and 16B, the intensity distribution area of the laser beam transmitted through the mask layer 140 (β1,β2) is narrower than the intensity distribution area of the laser beam made incident to the mask layer 140 (α1,α2). This narrowing effect of the mask layer reduces the diameter of a beam spot on the recording layer 160 and is called "masking effect" in this specification.

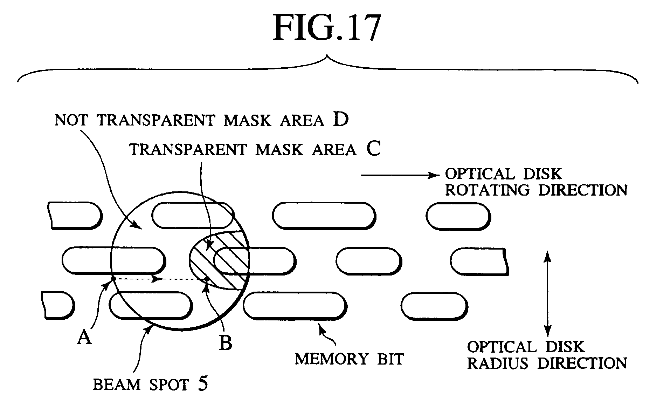

Fig. 17 explains the masking effect. The intensity distributions of Fig.16A show conditions at a point B of Fig.17 in the optical disk rotating direction, and the intensity distributions of Fig.16B show conditions at the point B in the optical disk radius direction.

In Fig.17, the optical disk is rotating in an arrow direction, and a laser beam of fixed power continuously forms a beam spot 5 on the mask layer 140. Beam intensity at the point B on the mask layer 140 is an integration of beam intensity between points A and B while the spot 5 moves. Heat produced in the mask layer 140 by absorbing the beam partly dissipates due to heat conduction and radiation, and the remaining heat increases the temperature and transmittance of the mask layer 140. Part of the spot 5 where the transmittance of the mask layer 140 increases is on the downstream of the spot 5 in the optical disk rotating direction. This transmittance-increased part of the mask layer 140 transmits the laser beam to form a spot on the recording layer 160. The diameter of the spot on the recording layer 160 is smaller than that of the spot 5 on the mask layer 140. In this way, the mask layer 140 provides the masking effect of reducing the diameter of a beam spot on the recording layer 160.

A hatched area C (transparent mask area C) in the spot 5 of Fig.17 corresponds to the beam part that transmits the mask layer 140 and forms a spot on the recording layer 160, and the remaining area of the spot 5(not transparent mask area D) does not transmit the mask layer 140. In this way, the mask layer 140 substantially reduces the diameter of a laser beam to write and read data to and from the recording layer 160 at higher density.

The mask layer 140 of the conventional optical disk is made of, indium (In) as disclosed in the Japanese Laid-Open Patent Publication No.73,961/1993 to prevent a laser beam from excessively increasing the temperature of the optical disk to destroy data in the optical disk when reading the data from the optical disk. It is not easy, however, to safely read data from an optical disk with a laser beam whose power is optimized for the masking effect. Data in an optical disk is sometimes destroyed during a read operation depending on the characteristics of the materials of the mask layer and recording layer of the optical disk. Even if the data is not completely destroyed, the data may provide insufficient output after repeating of read operations. According to the inventor's experiments , that indium is unusable for the mask layer if the recording layer is made of AgInSbTe.

The Japanese Laid-Open Patent Publication No.234,136/1993 discloses an optical material that has two or more nonlinear transmission or reflection characteristics with respect to a laser beam and is capable of restricting the spot diameter of a strong laser beam used for writing data to an optical disk as well as the spot diameter of a weak beam used for reading data from an optical disk.

The power of a laser beam used for writing data to an optical disk differs from that of a laser beam used for reading data from the optical disk by about 10 times, although the difference is dependent on the characteristics of the material of a recording layer of the optical disk. If phase-change materials such as AgInSbTe-based materials are used, the power of a write laser beam is about 12 mW, and that of a read laser beam is about 0.7 mW. If TeGeSb-based materials which are phase-change materials are used, the power of a write laser beam is about 15 mW, and that of a read laser beam is about 1 mW. If the power of a write laser beam greatly differs from that of a read laser beam, a mask layer that provides a large masking effect for a write operation may greatly attenuate a read laser beam, to provide an insufficient output for a read operation. The mask layer of an optical disk is usually formed on a beam incident side of a transparent substrate. A laser beam is made incident to the mask layer and is attenuated thereby, the attenuated beam is reflected by a recording layer of the optical disk, the reflected beam is again attenuated by the mask layer, and the reflected and attenuated beam is detected by an optical system to read data therefrom. The beam detected by the optical system is very weak due to the masking effect of the mask layer, and therefore, it is impractical to provide the mask layer with a strong masking effect.

The Japanese Laid-Open Patent Publication No.315,419/1991 forms a heat insulating layer between a mask layer and a recording layer, so that heat generated in the recording layer may not affect the mask layer. The disclosure forms the heat insulating layer from resin that hardly conducts heat. This disclosure points out that a mask layer made of inverse photochromic materials may deteriorate the masking effect of the mask layer due to heat produced in the recording layer. However, according to experiments conducted by the inventors of the present invention, the phenomenon pointed out in the disclosure was not confirmed because data in the optical disk was largely destroyed by heat produced by a laser beam transmitted through a mask layer.

The conventional optical disks having a mask layer may reduce the spot diameter of a laser beam to write and read data to and from the optical disks at high density. They, however, have the following two problems.

The first problem is the destruction of data in the optical disks. If a read laser beam whose power is optimized for a masking effect for a read operation is used to read data from an optical disk having a mask layer and if a recording layer of the optical disk is made of a rewritable phase-change material, data written in an amorphous state may gradually crystallize and be destroyed due to a strong laser beam emitted between read operations.

The second problem is a difficulty of controlling a mask effect. The power of a write laser beam is stronger than that of a read laser beam. If there is a mask layer designed to provide a large masking effect for a read operation, it will provide no masking effect for a write operation. If there is a mask layer designed to provide a large masking effect for a write operation, it will provide an excessive masking effect for a read operation, to provide substantially little read output.

### SUMMARY OF THE INVENTION

An object of the present invention is to provide an optical disk having a mask layer that provides a proper masking effect both for data write and read operations.

Another object of the present invention is to provide an optical disk capable of preventing the destruction of data in the optical disk due to a read laser beam that irradiates the optical disk to read data therefrom.

In order to accomplish the objects, a first aspect of the present invention provides an optical disk having a transparent disk substrate, a mask layer formed on the substrate, for providing optical transmittance that increases in response to a temperature rising due to an increase in the power of a laser beam emitted to the optical disk, and a recording layer formed on the mask layer, for storing data. The mask layer includes a read mask layer whose optical transmittance changes in response to the power of a read laser beam, and a write mask layer formed on the read mask layer, having optical transmittance that changes in response to the power of a write laser beam.

The read laser beam irradiates the recording layer through the substrate and mask layer, to read data from the recording layer. The write laser beam irradiates the recording layer through the substrate and mask layer, to write data to the recording layer. The read laser beam transmits the read mask layer depending on the beam intensity distribution and integration characteristics of the read mask layer, to substantially reduce the spot diameter of the laser beam on the recording layer. The write laser beam transmits the write mask layer depending on the beam intensity distribution and integration characteristics of the write mask layer, to reduce the spot diameter of the laser beam on the recording layer.

The power of the read laser beam differs from that of the write laser beam. The mask layer of the first aspect provides a masking effect both for read and write operations, to reduce the spot diameter of a laser beam, thereby writing and reading data to and from the recording layer at high density.

The write mask layer may provide a masking effect mainly for the write laser beam and may attenuate the read laser beam.

Namely, the write mask layer attenuates the power of the read laser beam, to prevent the destruction of data in the recording layer by the read laser beam.

A second aspect of the present invention provides an optical disk having a transparent disk substrate, a mask layer formed on the substrate and having optical transmittance that increases in response to a temperature rising due to an increase in the power of a laser beam made incident to the mask layer, and a recording layer formed on the mask layer, for storing data. The mask layer is made of a mixture of a first mask material whose optical transmittance changes in response to the power of a read laser beam and a second mask material whose optical transmittance changes in response to the power of a write laser beam.

The read laser beam is influenced by the beam intensity distribution and integration characteristics of the first mask material, to substantially reduce the spot diameter of the read laser beam on the recording layer. The write laser beam is influenced by the beam intensity distribution and integration characteristics of the second mask material, to substantially reduce the spot diameter of the write laser beam on the recording layer. In this way, the mask layer of the second aspect provides a masking effect to reduce the spot diameter of a laser beam both for read and write operations, thereby writing and reading data to and from the recording layer at high density.

### BRIEF DESCRIPTION OF THE DRAWINGS

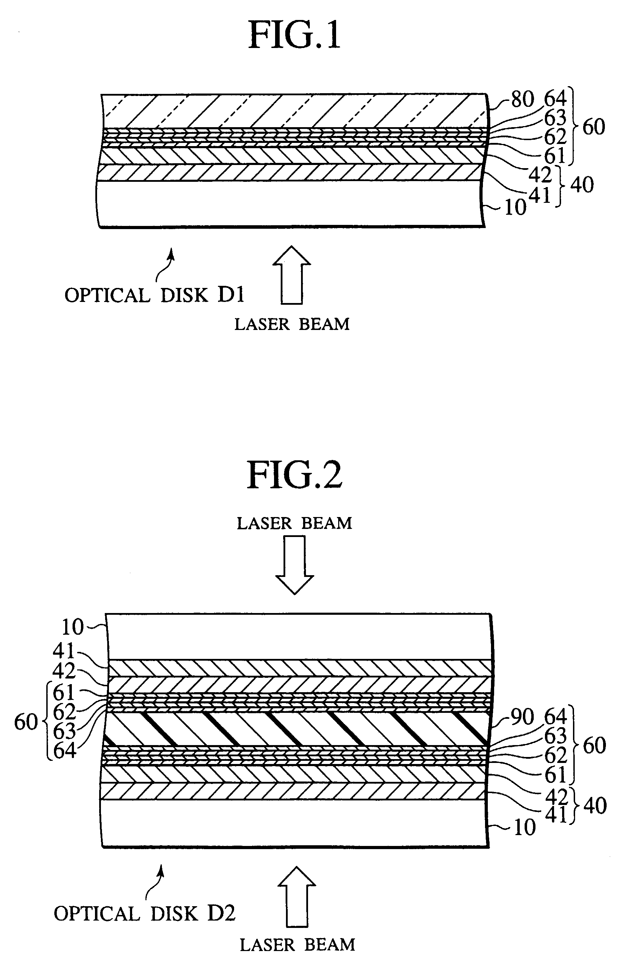

Fig. 1 is an enlarged sectional view showing an optical disk according to a first embodiment of the present invention;
Fig. 2 is an enlarged sectional view showing another optical disk according to the first embodiment;

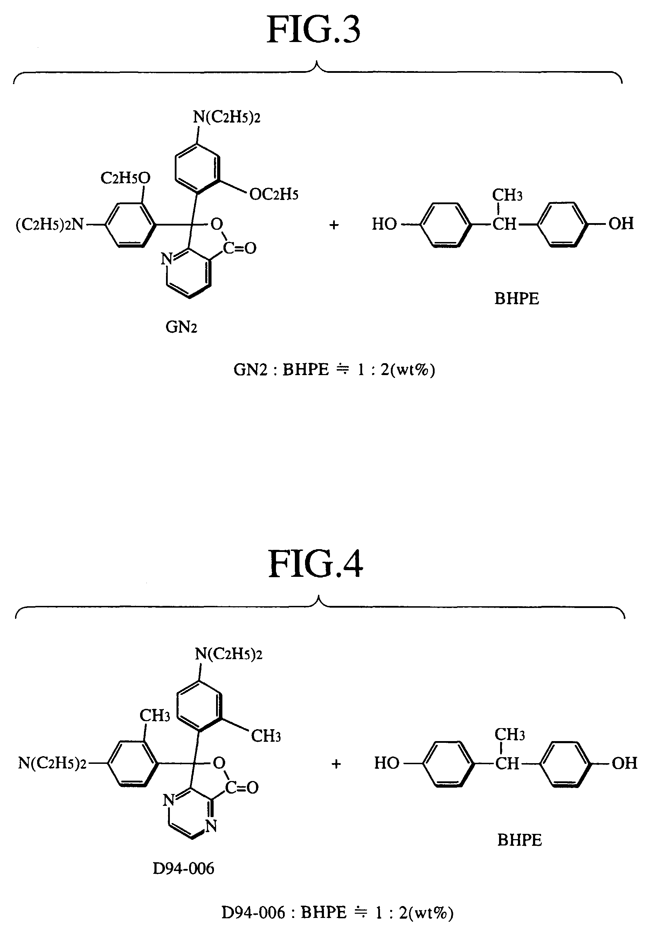

Fig. 3 shows the chemical structure of a read mask layer of the optical disk of the first embodiment;
Fig. 4 shows the chemical structure of a write mask layer of the optical disk of the first embodiment;

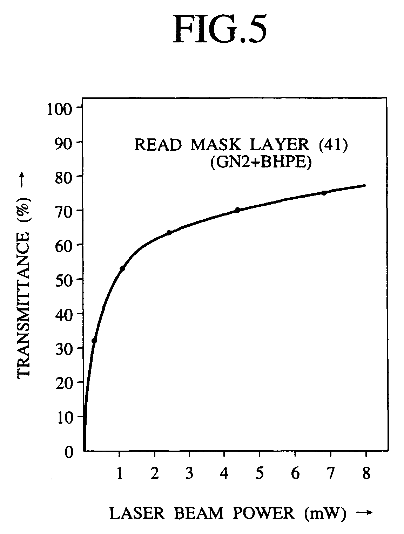

Fig. 5 is a graph showing the relationship between the power of a laser beam made incident to a read mask layer and the transmittance of the read mask layer of the first embodiment;

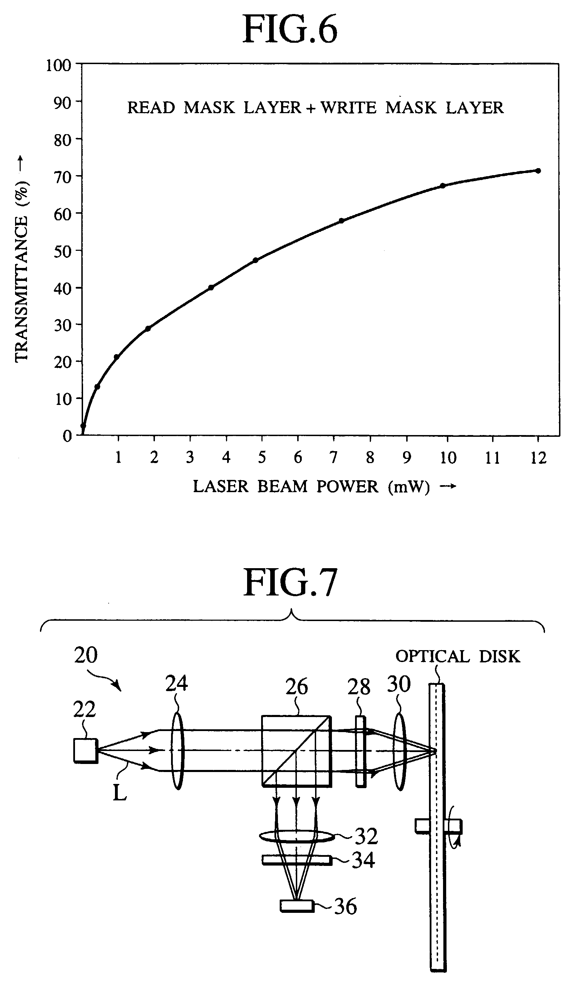

Fig. 6 is a graph showing the relationship between the power of a laser beam made incident to a read-write combination mask layers and the transmittance of the read-write combination mask layers of the first embodiment;
Fig. 7 shows an optical system for writing and reading data to and from the optical disk of the first embodiment;

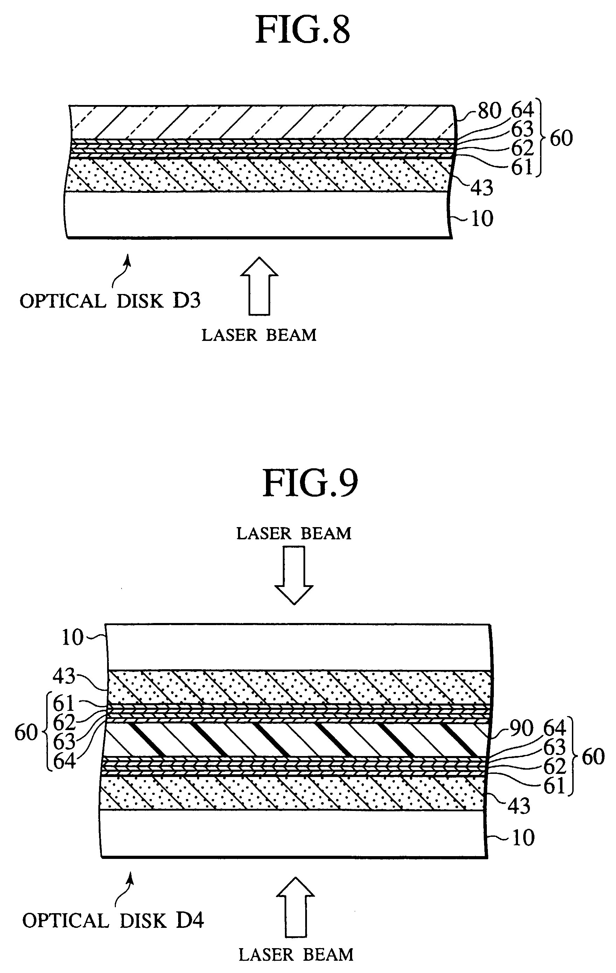

Fig. 8 is an enlarged sectional view showing an optical disk according to a second embodiment of the present invention;
Fig. 9 is an enlarged sectional view showing another optical disk according to the second embodiment;

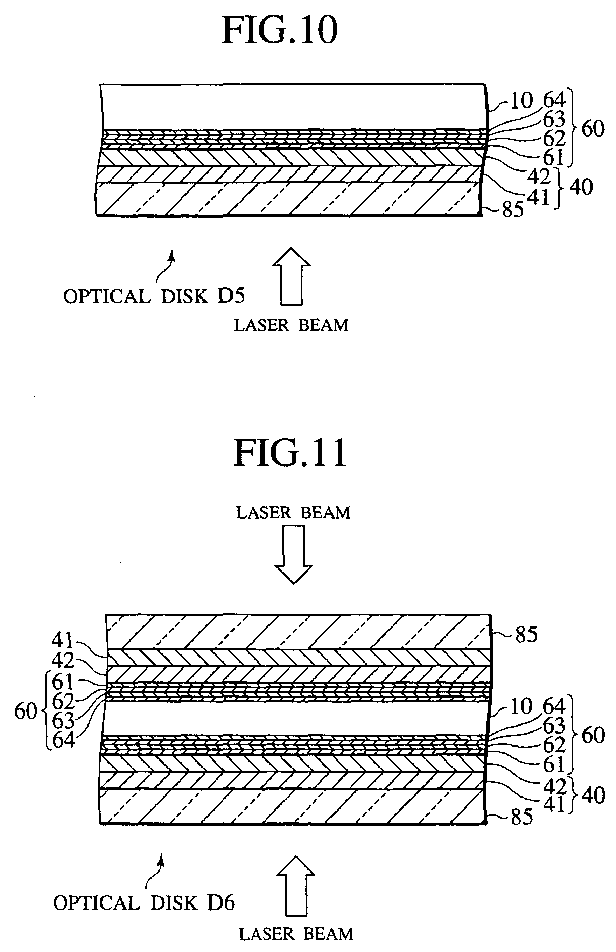

Fig. 10 is an enlarged sectional view showing an optical disk according to a third embodiment of the present invention;
Fig. 11 is an enlarged sectional view showing another optical disk according to the third embodiment;

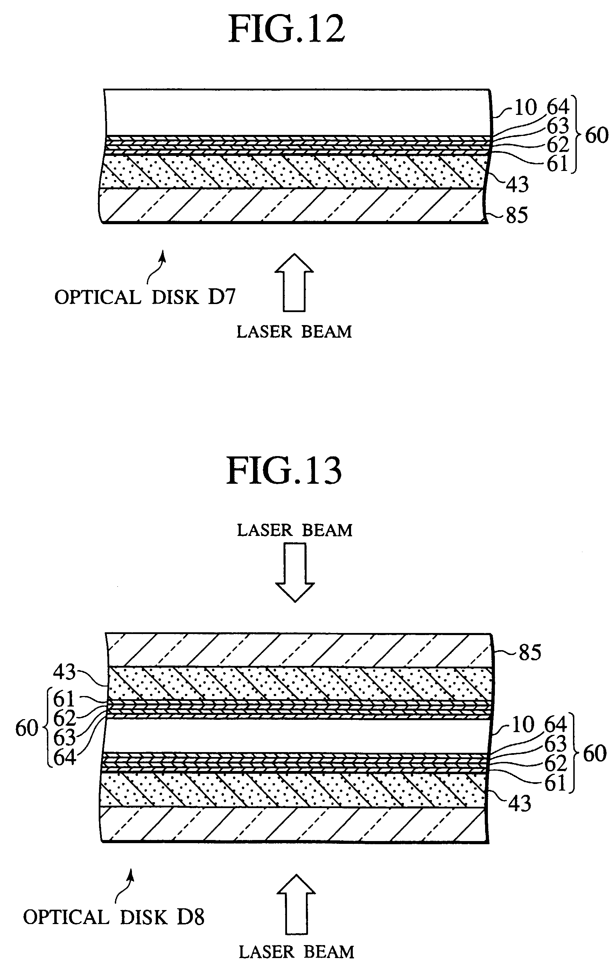

Fig. 12 is an enlarged sectional view showing an optical disk according to a fourth embodiment of the present invention;
Fig. 13 is an enlarged sectional view showing another optical disk according to the fourth embodiment;

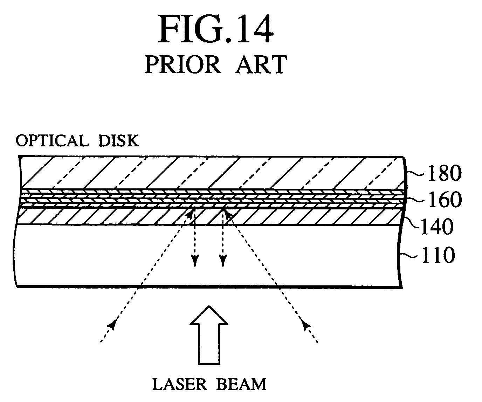

Fig.14 is an enlarged sectional view showing an optical disk according to the prior art;

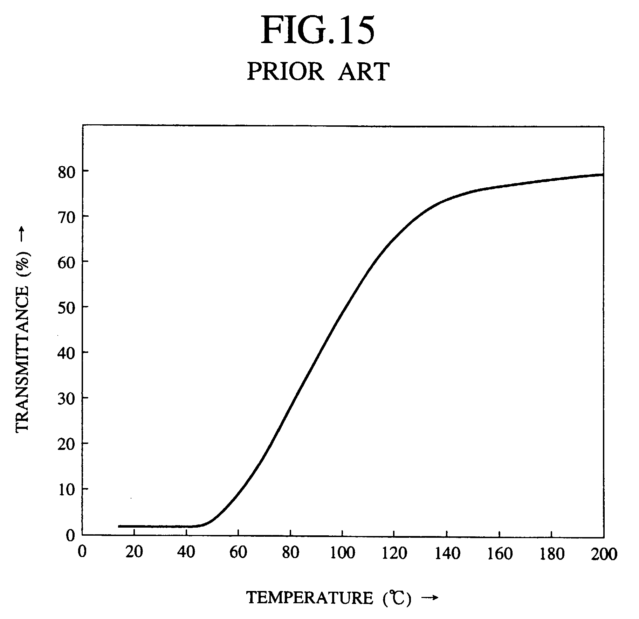

Fig.15 is a graph showing the relationship between the temperature of a mask layer and the transmittance thereof in the optical disk of the prior art;
Fig.16A is a graph showing an intensity distribution of the laser beam made incident to the mask layer of the prior art and an intensity distribution of the laser beam transmitted through the same mask layer in the rotating direction of the optical disk;
Fig.16B is a graph showing an intensity distribution of the laser beam made incident to the mask layer of the prior art and a distribution of the power of a beam transmitted through the same mask layer in the radius direction of the optical disk; and
Fig.17 shows a spot of a laser beam on the mask layer of the prior art and a spot of the laser beam transmitted through the mask layer whose transmittance is increased by heat produced by the laser beam.

### DESCRIPTION OF THE PREFERRED EMBODIMENTS

Optical disks according to the embodiments of the present invention will be explained with reference to Figs. 1 to 13.

### 〈First embodiment〉

Fig. 1 is an enlarged sectional view showing an optical disk according to the first embodiment of the present invention.

The optical disk D1 has a transparent disk substrate 10 and a mask layer 40 formed on the substrate 10. The optical transmittance of the mask layer 40 increases in response to a temperature rising caused by an increase in the power of a laser beam that irradiates the mask layer 40. The mask layer 40 consists of a read mask layer 41 and a write mask layer 42 that are successively formed on the substrate 10. A recording layer 60 for writing and reading data is formed on the mask layer 40. The recording layer 60 consists of a dielectric film 61, a phase-change-material layer 62, a dielectric layer 63, and an aluminum (Al) layer 64 that are successively formed on the mask layer 40. A passivation layer 80 is formed on the recording layer 60. Write and read laser beams are made incident to the optical disk D1 from the substrate 10 side, to write and read data to and from the recording layer 60. The optical disk D1 allows data write and read operations only from one side thereof.

Fig. 2 is an enlarged sectional view showing another optical disk according to the first embodiment. This optical disk D2 is formed by removing the protective layer 80 from each of two optical disks D1 of Fig. 1, orienting the transparent substrates 10 toward the outside, and adhering the recording layers 60 to each other through an adhesive layer 90. The optical disk D2 is capable of writing and reading data from each side thereof.

The details of each component of the optical disks D1 and D2 of the first embodiment will be explained. The transparent substrate 10 is a disk made of transparent resin such as polycarbonate resin and acrylic resin, or transparent glass.

The mask layer 40 has a property of increasing transmittance in response to a temperature rising caused by an increase in the power of a laser beam that irradiates the mask layer 40. Unlike the single-layer mask of the prior art of Fig.14, the mask layer 40 has a dual structure of the read mask layer 41 and write mask layer 42.

The read mask layer 41 formed on the substrate 10 is made of thermochromic materials, photochromic materials, phase-change materials, or any other materials that provide a masking effect for a read laser beam whose power is small, e.g., 1 to 2.5 mW. Also the read mask layer 41 shows optical transmittance changing in response to the power of a write laser beam, because the write laser beam is stronger than the read laser beam.

The first embodiment forms the read mask layer 41 from thermochromic materials, for example, a coloration agent GN2 (3,3-bis [4-diethylamino-2-ethoxiphenyl]-4-azaphthalide) of Yamamoto Kasei Company and a development agent BHPE (bis-hydroxyphenyl-ethane). This read mask layer is formed by employing a vacuum deposition apparatus which has two deposition sources of the agents GN2 and BHPE. The agents GN2 and BHPE are used at a weight ratio of about 1:2.

Fig. 3 shows the chemical structure of the material for read mask layer 41, and Fig. 4 shows that of the write mask layer 42.

According to this inventor's experiments, the read mask layer 41 provides a desired masking effect for a read laser beam whose power is about 1 to 2.5 mW, in particular, about 1.5 mW.

Fig. 5 is a graph showing the relationship between the power of a laser beam made incident to a read mask layer and the transmittance of the read mask layer 41 of the first embodiment. The transmittance of Fig. 5 is for the whole spot of a laser beam.

The write mask layer 42 is formed on the read mask layer 41 and is made of thermochromic materials, photochromic materials, phase-change materials, or any other materials that provide a masking effect for a write laser beam whose power is large, e.g., about 15 mW.

This embodiment makes the write mask layer 42 from thermochromic materials, for example, a prototype coloration agent D94-006 (3,3-bis [4-diethylamino-2-methylphenyl]-4-7-diazaphthalide) of Yamamoto Kasei Company and a development agent BHPE (bis-hydroxyphenyl-ethane) as shown in Fig. 4. The agents D94-006 and BHPE are simultaneously used at a weight ratio of about 1:2 to form a film in a vacuum deposition apparatus with two deposition sources.

The write mask layer 42 has a transmittance of about 44% with respect to the read laser beam of low power. The transmittance of the write mask layer 42 increases as the power of a laser beam is increased to that of the write laser beam.

Fig. 6 is a graph showing the relationship between the power of a laser beam made incident to a mask layer 40 consisting of the read mask layer 41 and the write mask layer 42 and the transmittance of the mask layer 40.

As the power of a laser beam increases, the transmittance of the read mask layer 41 steeply increases to provide a masking effect for the read laser beam. Thereafter, the transmittance of the write mask layer 42 increases to provide a masking effect for the write laser beam. Since the transmittance of the write mask layer 42 is high, i.e., about 44% even for a low-power laser beam, the masking effect of the write mask layer 42 is not so large.

The recording layer 60 formed on the write mask layer 42 may be made of phase-change materials, magneto-optic materials, organic materials, etc. The first embodiment forms the recording layer 60 of multilayer structure from phase-change materials. More precisely, the recording layer 60 consists of, from the side of the write mask layer 42, a ZnS-SiO₂ dielectric film 61, an AgInSbTe phase-change-material film 62, a ZnS-SiO₂ dielectric film 63, and an Al (aluminum) film 64.

The passivation layer 80 and adhesive layer 90 formed on the recording layer 60 may be made of, for example, photopolymer.

Fig. 7 shows an optical system 20 for writing and reading data to and from the optical disk of the first embodiment.

The optical system 20 used for the optical disk D1 (D2) of the first embodiment will briefly be explained with reference to Fig. 7.

The optical system 20 includes a semiconductor laser 22 for emitting a laser beam of 650 nm in wavelength, a collimator lens 24 for collimating the laser beam from the semiconductor laser 22, a polarizing prism 26, a 1/4-wavelength plate 28, an object lens 30 having an NA (numerical aperture) of 0.6 for focusing the laser beam on the optical disk D1 (D2), a condensing lens 32 for condensing reflected light from the optical disk branched by the polarizing prism 26, a cylindrical lens 34 for acquiring focus information and tracking information from the reflected light, and a photodetector 36 for detecting the condensed light.

If the optical system 20 is to separately carry out write and read operations, the power of a laser beam from the semiconductor laser 22 is switched to provide one of the write and read laser beams. If the optical system 20 is to simultaneously carry out write and read operations, the optical system 20 may have a write optical system and a read optical system.

For comparison, an optical disk having the recording layer 60 made of AgInSbTe is prepared without the read mask layer 41 nor the write mask layer 42. With a laser beam of 650 nm in wavelength, the object lens 30 of 0.6 in numerical aperture, and the optical disk rotation of 3.5 m/s in linear speed, the power of the read laser beam must be lower than 0.7 mW, or data in the recording layer will be destroyed.

For another comparison, an optical disk having the read mask layer 41 having the characteristics of Fig. 5 is prepared. When a read operation is continuously carried out for a long time on the same location on the optical disk with a read laser beam of 1 mW or stronger, data in the recording layer is destroyed. At this time, the transmittance of the mask layer for the whole of a laser beam is small, i.e., about 60%, however, intensity at the center of a Gaussian distribution is so strong that the center is heated. The heat of the read mask layer 41 is conducted to the recording layer 60 to destroy data in the recording layer 60.

On the other hand, the optical disk D1 (D2) of the first embodiment has the read mask layer 41 and write mask layer 42. A laser beam transmitted through the read mask layer 41 is partially absorbed by the write mask layer 42, to properly attenuate the power of the laser beam. In addition, the write mask layer 42 insulates heat produced in the read mask layer 41, to prevent the destruction of data in the recording layer 60.

It is preferable that the transmittance of the write mask layer 42 with respect to the read laser beam is in the range of 30% to 70%. If the transmittance of the write mask layer 42 with respect to the read laser beam is below 30%, a detective output will be too weak because the read laser beam is doubly attenuated in an incoming path and in a reflection path when detecting and reading a reflected beam from the recording layer 60 of the optical disk D1 (D2). If the detective output is very weak, it will destabilize a focus, tracking servo, and a C/N ratio. If the transmittance of the write mask layer 42 with respect to the read laser beam is above 70%, there will be no masking effect for a write operation nor an attenuating effect for the read laser beam. This easily destroys data in the recording layer 60 when the power of the read laser beam fluctuates.

If the read mask layer 41 is made of phase-change materials such as In, TeGe, and Sb instead of thermochromic materials, the power of a read laser beam necessary to provide a maximum masking effect becomes larger than that with the read mask layer made of thermochromic materials. Then, data in the recording layer 60 may be destroyed after repetitive read operations. This problem will not occur when the phase-change materials are used to make the write mask layer 42.

If the recording layer 60 is made of phase-change materials to realize a rewritable optical disk, the optical disk must be initialized before use by irradiating the optical disk with a laser beam to change an amorphous state of the recording layer 60 into a crystallized state. If the write mask layer 42 is made of phase-change materials such as In, TeGe, and Sb, the power of a laser beam for the initialization must be large. On the other hand, if the write mask layer 42 is made of thermochromic materials, the wavelength of a laser beam for the initialization may be so selected as to minimize the attenuation of the initialization laser beam. In this case, the power of the initialization laser beam may be equal to that of an initialization laser beam used when there is no write mask layer 42.

Generally, a write laser beam of large power involves less noise compared with a read laser beam of small power. Accordingly, a better C/N ratio will be achieved by reading data with the use of a laser beam of 1.5 mW (corresponding to a laser output of about 4.5 mW from a semiconductor laser) that is attenuated through the write mask layer 42, instead of a laser beam of 0.7 mW (corresponding to a laser output of about 2.1 mW from a semiconductor laser).

As explained above, the optical disk D1 (D2) of the first embodiment employs the mask layer 40 made of the read mask layer 41 and write mask layer 42, so that the read mask layer 41 may provide a masking effect for a read laser beam and the write mask layer 42 may attenuate the power of the read laser beam. As a result, the first embodiment is able to read data without destroying the data. In addition, the write mask layer 42 provides a masking effect for a write laser beam. Consequently, the first embodiment surely writes and reads data to and from the optical disk D1 (D2) at high density.

### 〈Second embodiment〉

Fig. 8 is an enlarged sectional view showing an optical disk according to the second embodiment of the present invention, and Fig. 9 is an enlarged sectional view showing another optical disk according to the second embodiment.

The second embodiment is based on the technology of the first embodiment. The optical disk D3 of the second embodiment has a transparent substrate 10 on which a mask layer 43 is formed. The mask layer 43 is a single write/read mask layer. A recording layer 60 is formed on the mask layer 43. The recording layer 60 consists of, successively from the mask layer 43, a dielectric film 61, a phase-change-material film 62, a dielectric film 63, and an Al (aluminum) film 64. A passivation layer 80 is formed on the recording layer 60. Write and read laser beams are made incident from the substrate 10 side, so that data may be written and read to and from the optical disk D3 only from one side thereof.

The optical disk D4 of Fig. 9 is a combination of two optical disks each being of Fig. 8 without the passivation layers 80. Namely, two optical disks D3 without the passivation layers 80 are prepared, the substrates 10 thereof are oriented toward the outside, and the recording layers 60 are adhered to each other through an adhesive layer 90, to form the optical disk D4. The optical disk D4 is capable of writing and reading data to and from each side thereof.

The write/read mask layer 43 of the optical disk D3 (D4) of the second embodiment is made of a mixture of a read mask material that provides a masking effect for a read laser beam and a write mask material that provides a masking effect for a write laser beam. The mask layer 43 is formed on the substrate 10. The mask layer 43 is formed from the coloration agent GN2 of Yamamoto Kasei Company as the read mask material, the coloration agent D94-006 of Yamamoto Kasei Company as the write mask material, and BHPE (bis-hydroxyphenyl-ethane) as a common development agent. The weight ratio of GN2:D94-006:BHPE is about 2:1:6, and these agents are mixed to form a single layer by vacuum vapor deposition.

The transmittance characteristics of the write/read mask layer 43 are substantially equal to those of a combination of the read mask layer 41 and write mask layer 42 of the first embodiment of Fig. 6. Namely, the mask layer 43 provides a masking effect for a read laser beam and attenuates the power of the read laser beam so that it may not destroy data in the recording layer 60. The mask layer 43 also provides a masking effect for a write laser beam. According to this inventor's experiments, the mask layer 43 causes no destruction of data in the recording layer even with a read laser beam of 1.5 mW.

As explained above, the optical disk D3 (D4) of the second embodiment has the single write/read mask layer 43 made of a mixture of a read mask material and a write mask material, to provide the same effect as the optical disk D1 (D2) of the first embodiment.

### 〈Third embodiment〉

Fig. 10 is an enlarged sectional view showing an optical disk according to the third embodiment of the present invention, and Fig. 11 is an enlarged sectional view showing another optical disk according to the third embodiment.

The optical disk D5 has a disk substrate 10 and a recording layer 60 for writing and reading data formed on the disk substrate 10. The disk subatrate 10 is not necessary to be transparent. The recording layer 60 consists of an aluminum (Al) reflecting layer 64, a dielectric layer 63, a phase-change-material layer 62, a dielectric film 61 that are successively formed on the disk substrate 10. A mask layer 40 consists of a read mask layer 41 and a write mask layer 42 that are successively formed on the recording layer 60. A transparent passivation layer 85 is formed on the mask layer 40. The optical transmittance of the mask layer 40 increases in response to a temperature rising caused by an increase in the power of a laser beam that irradiates the mask layer 40. This transparent passivation layer 85 may be a coated layer or a transparent disk substrate. Between the mask layer 40 and the transparent passivation layer 85, another passivation layer may be inserted to protect the mask layer 40. Preferably, thickness of the transparent passivation layer 85 is less than 0.2mm. Write and read laser beams are made incident to the optical disk D5 from the transparent passivation layer 85 side, to write and read data to and from the recording layer 60.

Fig. 11 is an enlarged sectional view showing another optical disk according to the third embodiment. This optical disk D6 has a recording layer 60, a mask layer 40 and a transparent passivation layer 85 successively formed on the upper face of the disk substrate 10. Also the optical disk D6 has another recording layer 60, mask layer 40 and transparent passivation layer 85 successively formed on a back face of the disk substrate 10. Preparing two optical disks D5, orienting each of transparent substrates 10 inside and gluing the transparent substrates 10 to each other may form this optical disk D6. The optical disk D6 is capable of writing and reading data from each side thereof.

Each component material of the disk D5 (D6) is almost the same as each material of the disk D1 (D2) of the first embodiment.

According to the third embodiment, laser beams are made incident to the optical disk D5 (D6) from the transparent passivation layer 85 side. Therefore, the thickness of the transparent passivation layer 85 can be so thin that a lens having a large N A number, such as 0.85, is capable of being employed for reading and writing data.

### 〈Fourth embodiment〉

Fig. 12 is an enlarged sectional view showing an optical disk according to the fourth embodiment of the present invention, and Fig. 13 is an enlarged sectional view showing another optical disk according to the fourth embodiment.

An optical disk D7 according to the fourth embodiment has a disk substrate 10 and a recording layer 60 for writing and reading data formed on the disk substrate 10. The disk substrate 10 is not necessary to be transparent. The recording layer 60 consists of an aluminum (Al) reflecting layer 64, a dielectric layer 63, a phase-change-material layer 62, a dielectric film 61 that are successively formed on the disk substrate 10. On the recording layer60, a write/read mask layer 43 and a transparent passivation layer 85 are formed successively. The write/read mask layer 43 is similar to the write/read mask layer 43 of the second embodiment. Namely, the write/read mask layer 43 is made of a mixture of a read mask material that provides a masking effect for a read laser beam and a write mask material that provides a masking effect for a write laser beam. Except for the write/read mask layer 43, the optical disk D7 has an almost same composition of the optical disk D5 according to the third embodiment. Similarly, an optical disk D8 has an almost same composition of the optical disk D6 according to the third embodiment except for the write/read mask layer 43.

Although the inventions have been described above by reference to certain embodiments of the inventions, the inventions are not limited to the embodiments described above. Various modifications will become possible for those skilled in the art after receiving the teachings of the present disclosure without departing from the scope thereof.

## Claims

1. An optical disk comprising:
a transparent disk substrate;
a mask layer formed on the transparent disk substrate, the optical transmittance of the mask layer increasing in response to a temperature rising caused by an increase in the power of a laser beam made incident to the mask layer; and
a recording layer formed on the mask layer, for storing data, wherein:
the mask layer includes a read mask layer and a write mask layer, the optical transmittance of the read mask layer changing in response to the power of a read laser beam used to read data from the recording layer, the optical transmittance of the write mask layer changing in response to the power of a write laser beam used to write data to the recording layer.

2. The optical disk of claim 1, wherein:
the mask layer provides a masking effect for a laser beam that is made incident to the transparent disk substrate toward the recording layer, the masking effect reducing a spot diameter of the laser beam on the recording layer;
the read mask layer provides the masking effect mainly for the read laser beam;
and
the write mask layer provides the masking effect mainly for the write laser beam and attenuates the read laser beam.

3. The optical disk of claim 1 or claim 2, wherein:
the write mask layer provides an optical transmittance of 30% to 70% for the read laser beam.

4. The optical disk of claim 1 or claim 2, wherein:
the read mask layer and write mask layer are made of thermochromic materials.

5. An optical disk comprising:
a transparent disk substrate;
a mask layer formed on the transparent disk substrate, the optical transmittance of the mask layer increasing in response to a temperature rising caused by an increase in the power of a laser beam made incident to the mask layer; and
a recording layer formed on the mask layer, for storing data, wherein:
the mask layer is a mixture of a first mask material and a second mask material, the optical transmittance of the first mask material changing in response to the power of a read laser beam used to read data from the recording layer, the optical transmittance of the second mask material changing in response to the power of a write laser beam used to write data to the recording layer.

6. The optical disk of claim 5, wherein:
the mask layer provides a masking effect for a laser beam that is made incident to the transparent disk substrate toward the recording layer, the masking effect reducing a spot diameter of the laser beam on the recording layer;
the first mask material provides the masking effect mainly for the read laser beam;
and
the second mask material provides the masking effect mainly for the write laser beam and attenuates the read laser beam.

7. The optical disk of claim 5 or claim 6, wherein:
the first and second mask materials are thermochromic materials.

8. An optical disk comprising:
a disk substrate;
a recording layer formed on the disk substrate, for storing data,
a mask layer formed on the recording layer, the optical transmittance of the mask layer increasing in response to a temperature rising caused by an increase in the power of a laser beam made incident to the mask layer; and
a transparent passivation coated layer or a transparent passivation substrate formed on the mask layer, wherein:
write and read laser beams are made incident to the optical disk from the transparent passivation coated layer or a transparent passivation substrate side; and
the mask layer includes a read mask layer and a write mask layer, the optical transmittance of the read mask layer changing in response to the power of a read laser beam used to read data from the recording layer, the optical transmittance of the write mask layer changing in response to the power of a write laser beam used to write data to the recording layer.
